Europäisches Patentamt

(19) European Patent Office

Office européen des brevets

(11) Publication number: **0 136 023**
**B1**

(12) **EUROPEAN PATENT SPECIFICATION**

(45) Date of publication of patent specification: **18.03.87**

(51) Int. Cl.[4]: **B 60 G 15/06, F 16 C 19/10**

(21) Application number: **84305451.1**

(22) Date of filing: **10.08.84**

(54) **Steerable vehicle suspension strut assembly.**

(30) Priority: **01.09.83 US 528569**

(43) Date of publication of application:
**03.04.85 Bulletin 85/14**

(45) Publication of the grant of the patent:
**18.03.87 Bulletin 87/12**

(84) Designated Contracting States:
**DE GB**

(56) References cited:
**DE-A-1 525 294**
**DE-U-7 514 859**
**FR-A-2 433 427**
**FR-A-2 513 334**
**US-A-4 120 543**

**REVUE TECHNIQUE AUTOMOBILE, Vol. 32,
No. 365, March, 1977, page 73. Suspension:
Peugeot 304.**

(73) Proprietor: **GENERAL MOTORS CORPORATION
General Motors Building 3044 West Grand
Boulevard
Detroit Michigan 48202 (US)**

(72) Inventor: **Lederman, Frederick Edward
104 Stonyridge Drive
Sandusky Ohio, 44870 (US)**

(74) Representative: **Breakwell, John Neil Bower
et al
GM Patent Section Luton Office (F6)
P.O. Box No. 3 Kimpton Road
Luton Beds. LU2 OSY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a steerable vehicle suspension strut assembly as specified in the preamble of claim 1, for example as disclosed in US—A—4 260 177.

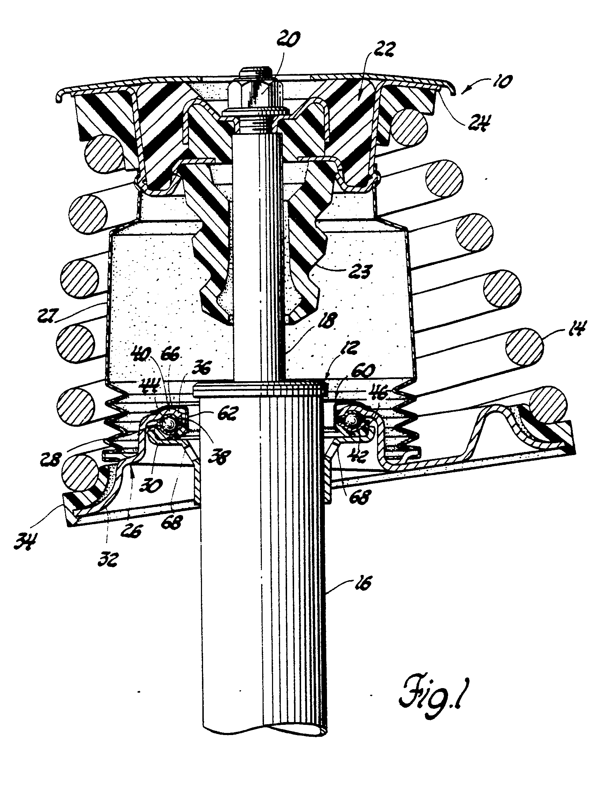

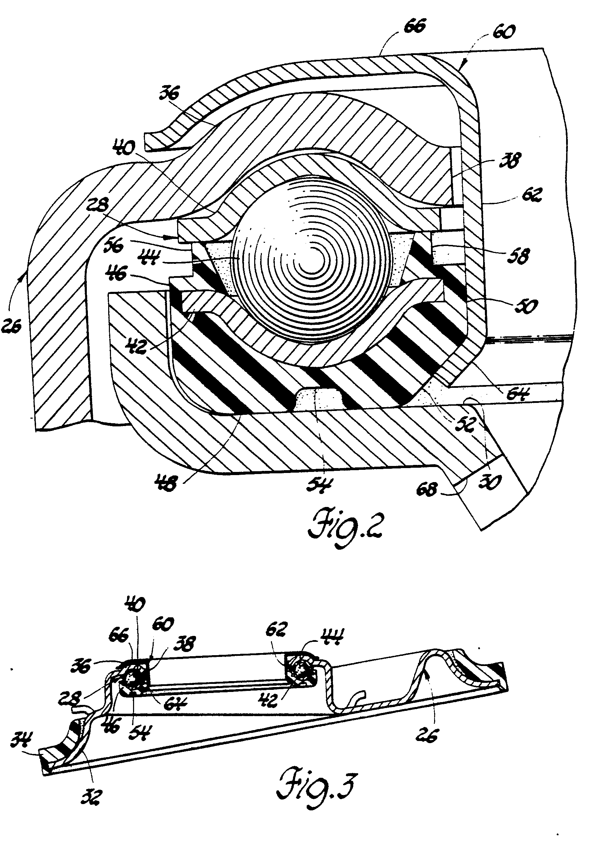

The use of vehicle suspensions of the type commonly known as a MacPherson strut is increasing, especially for steerable front suspensions. In this type of suspension, a piston-type telescopic damper commonly has a cylindrical reservoir and a piston rod contained therein. The bottom of the cylindrical reservoir is attached to a steering knuckle of the vehicle, the upper end of the piston rod is rigidly attached to an elastomer mount on the vehicle, and a shock-absorbing compression coil spring surrounds the damper and is seated between an upper and a lower spring seat. In a steerable suspension, in use either the uppermost coil of the spring turns relative to the upper mount or alternatively the cylindrical reservoir turns relative to the lowermost coil of the spring. In either case, it is desirable to interpose a bearing between the two relatively rotatable parts to facilitate steering and handling. Figure 3 of the said US—A—4 260 177 shows an anti-friction bearing unit interposed between a lower spring seat and a bearing seat on the cylindrical reservoir of the damper.

However, in suspension structures in which the bearing is disposed between the lower spring seat and the damper, the location of the bearing in the lower part of the suspension represents a relatively harsh environment, such that there is a need for more effective sealing and shielding of the bearing.

To this end, a steerable vehicle suspension strut assembly in accordance with the present invention is characterised by the features specified in the characterising portion of claim 1.

With such a steerable vehicle suspension strut assembly, therefore, the shielding and retention means effectively retains the bearing together with the lower spring seat as a unit separable from the suspension strut for ease of assembly and shipping, and, when in place within the suspension, allows free turning of the bearing while at the same time shielding it from contaminants in the prevailing relatively harsh environment.

In a preferred arrangement in accordance with the present invention, the vehicle suspension is a steerable strut-type front suspension in which the uppermost coil of a shock-absorbing compression coil spring surrounding a piston-type damper is held non-turnably with respect to an upper elastomer mount on the vehicle. The lowermost coil of the spring is seated on a lower spring seat which surrounds and is radially spaced from a cylindrical reservoir of the damper. An anti-friction bearing is seated betwen the under-surface of the lower spring seat and a bearing seat portion of the damper, to allow the damper to turn easily relative to the spring seat and the spring.

In conformity with the invention, a shielding and retention member includes a generally cylindrical inner shielding wall which is disposed between and radially spaced from the cylindrical reservoir of the damper and the lower spring seat and extends axially along the inner side of the bearing from a lower race of the bearing to the upper surface of the lower spring seat to completely shield the inner side of the bearing from the damper. In this arrangement, also, the lower race includes a resilient elastomer layer which is seated on the generally annular bearing seat portion of the cylindrical reservoir of the damper. The shielding and retention member also includes a generally annular upper shielding wall which is integral with the top of the inner shielding wall and which extends radially outwardly over the upper surface of the lower spring seat.

During assembly, the lower edge of the cylindrical inner shielding wall is crimped into gripping engagement with the elastomer layer on the lower race, thus maintaining the lower spring seat and the bearing together as a separate sub-assembly. A slight axial clearance may exist between the upper shielding wall and the upper surface of the lower spring seat, but this clearance is made small enough for the sub-assembly to remain intact and substantially rattle-free for ease of shipping and handling.

When the sub-assembly is assembled into the complete suspension, the axial force of the compression spring presses down on the lower spring. This serves to bias the bearing between the under-surface of the lower spring seat and the bearing seat portion of the damper, and acts to maintain or to slightly increase the axial clearance between the upper shielding wall and the lower spring seat, such axial clearance being required between the lower spring seat and the shielding and retention member so that the bearing may turn freely. Even with such clearance, the bearing is essentially completely shielded by the inner shielding wall and by the upper shielding wall which extends out over the top of the lower spring seat in closely conforming relation thereto.

In the drawings:

Figure 1 is a fragmentary longitudinal section, with parts in elevation, of one embodiment of a steerable vehicle suspension strut assembly in accordance with the present invention, with a telescopic damper and a shock-absorbing coil-type compression spring together with a thrust bearing sub-assembly, in place in a vehicle front suspension;

Figure 2 is a fragmentary enlarged sectional view of a part of the thrust bearing sub-assembly shown in Figure 1; and

Figure 3 is a longitudinal sectional view of the thrust bearing sub-assembly separate from the rest of the vehicle suspension strut.

With reference first to Figure 1 of the drawings, a vehicle suspension strut indicated generally at 10 includes a telescopic damper 12 surrounded by a shock-absorbing compression coil spring 14. The damper 12 includes a lower cylindrical reservoir 16 out of which extends a piston rod 18, the top of which is threaded and is rigidly attached by a nut 20 to an elastomer mount indicated generally at 22, which is in turn rigidly attached to a sheet metal tower structure in the front wheel well of the vehicle, not shown. A standard elastomeric jounce bumper 23 surrounds the upper part of the piston rod 18. The top coil of the spring 14 is seated on an upper spring seat 24 that is also attached rigidly to the vehicle, and the lowermost coil of the spring is seated on a lower spring seat indicated generally at 26. An anti-friction bearing indicated generally at 28 is seated between the undersurface of the lower spring seat 26 and a generally annular bearing seat 30 which is in turn rigidly attached to the cylindrical reservoir 16. Thus as the cylindrical reservoir 16 is turned by the usual steering system of the vehicle (not shown) relative to the piston rod 18, the reservoir will turn on the bearing 28 relative to the lower spring seat 26, but the spring 14 will not turn relative to the vehicle. A flexible stone shield (stone guard) 27 extends between the two spring seats 24 and 26. The suspension 10 as described so far, and the operation thereof, are standard and the details thereof will not be further described.

With reference next to Figure 3 of the drawings, a thrust bearing sub-assembly in conformity with the present invention is shown separate from the vehicle suspension. The lower spring seat 26 includes a generally annular outer skirt 32 upon which the lower coil of spring 14 is seated, insulated by an insulator 34. The outer skirt 32 is not symmetrical, because of the angle of the suspension strut 10 relative to the vehicle. The radially inner portion of the lower spring seat 26 includes a generally annular bearing housing portion 36 which has an opening 38 therethrough of a size sufficient to fit over and clear the cylindrical reservoir 16, as may best be seen in Figure 1. The bearing housing portion 36 is stamped into a general cup shape in order to fit closely over the bearing 28, which, in the embodiment disclosed, includes a symmetrical upper race 40 and a lower race 42 which corresponds generally to the lower surface of the bearing housing portion 36, with a complement of anti-friction elements, in the form of bearing balls 44 in this embodiment, between the lower race 42 and the bearing housing portion 36.

Other types of anti-friction bearing 28 could alternatively be used, and the shape of the bearing housing portion 36 would be modified accordingly. In fact, the bearing housing portion 36 could if required itself serve as the upper race of the anti-friction bearing 28, with just the lower race 42 serving to contain the bearing balls 44 in conjunction with the housing portion 36, in an alternative design not shown.

With reference now to Figure 2, the lower race 42 includes an elastomer layer 46 which may be moulded around the bottom of the race, and has a generally flat lower surface 48 which seats directly on the bearing seat 30. The elastomer layer 46 has a generally cylindrical radially inner wall 50 which surrounds and is radially spaced from the cylindrical reservoir 16, and a generally conical wall 52 merging with the lower surface 48. In addition, the elastomer layer 46 includes a circular groove 54 cut or formed into the lower surface 48, and integrally moulded sealing walls 56 and 58. The elastomer layer 46 is not strictly necessary to the operation of the invention in its broadest sense, but co-operates therewith in a manner to be described.

The lower spring seat 26 and the anti-friction bearing 28 are maintained together as a separate sub-assembly, and the bearing 28 is shielded by a shielding and retention member in conformity with the invention, designated generally 60. The member 60 includes a first, generally cylindrical inner shielding wall 62 which is best seen in Figure 2, and has a diameter large enough to clear the edge of the opening 38. Therefore, the inner shielding wall 62 surrounds and is radially spaced from the cylindrical reservoir 16, and is also radially spaced from the edge of the opening 38 when assembled in the suspension strut 10. The inner shielding wall 62 extends axially from a radially outwardly turned lower edge region 64, forming a retention portion, to a second, generally annular upper shielding wall 66, thus shielding the radially inner side of the bearing balls 44 from the entry of contaminants at the cylindrical reservoir 16. The inner diameter of the inner wall 50 of the elastomer layer 46 and the outer diameter of the cylindrical wall 62 are substantially equal, thus creating a tight frictional mating fit between the two, in addition to a gripping engagement of the lower edge region 64 with the conical wall 52 of the elastomer layer 46.

The inner shielding wall 62 is integral with the upper shielding wall 66, which extends radially outwardly over the upper surface of the bearing housing portion 36. The upper shielding wall 66 is shaped to conform fairly closely to the shape of the top surface of the housing portion 36, and could be made to exend even further thereover, if desired, to increase the shielding capability of this wall 66.

The sub-assembly shown in Figure 3 would be built up by simply laying the bearing housing portion 36 in place against the upper race 40, whereupon the shielding and retention member 60 would be press-fitted down with the outer diameter of the cylindrical inner shielding wall 62 tightly engaging the inner diameter of the radially inner wall 50 until the upper shielding wall 66 lightly engaged the upper surface of the bearing housing portion 36. Then the retention portion constituted by the lower edge region 64 of the inner shielding wall 62 would be crimped outwardly to non-turnably engage the conical wall 52. The total axial length of the cylindrical inner wall 62 from its lower edge region 64 to the upper shielding wall 66 is determined such that there will be a slight axial clearance between the upper surface of the housing portion 36 and the upper shielding wall 66 after the sub-assembly has been assembled into the suspension strut 10, as may best be seen in Figures 1 and 2. The crimping also serves to retain together the lower spring seat 26 and the bearing 28, as seen in Figure 3, as a sub-assembly which is substantially rattle-free. Prior to assembly with the suspension strut, the said axial clearance in the sub-assembly may vary from near zero to some micrometres (a few thousandths of an inch), and need not be precisely or rigidly controlled. The requirement is to hold the spring seat and the bearing together until these parts are installed in the suspension strut.

The sub-assembly of Figure 3 may be assembled to the suspension strut 10 in a fixture. The innermost diameter of the shielding and retention member 60 is large enough to allow the sub-assembly of Figure 3 to slip over the largest diameter of the damper 12. This permits the sub-assembly to be moved quickly to its assembled position with the elastomer-clad lower race 42 adjacent the bearing seat 30 as shown in Figure 1. The diameter of the inner shielding wall 62 may be made large enough to fit over several sizes of damper 12. The coil spring 14 is compressed against the outer skirt 32 of the lower spring seat 26 to force the bearing housing portion 36 down upon the upper race 40, in turn loading the bearing balls 44 against the lower race 42, and the lower race 42 against the elastomer layer 46 and ultimately against the bearing seat 30. Because of the tight engagement of the cylindrical inner shielding wall 62 with the elastomer layer 46 as described, and because the inner shielding wall 62 is clear of all other components, any further compression of the sealing walls 56 and 58 or of the elastomer layer 46 which occurs will serve only to provide more or maintain not less than the initial axial clearance between the upper shielding wall 66 and the top surface of the bearing housing portion 36. Thus because the shielding and retention member 60 is clear of the lower spring seat 26 and the upper race 40 of the bearing 28, the lower spring seat 26 can turn easily and freely on the bearing 28, or, expressed from the perspective of the vehicle, the cylindrical reservoir 16 can turn freely with respect to the non-turnably held compression spring 14.

With reference to Figure 1, it will be apparent that the bearing balls 44 of the bearing 28 are completely shielded on the top and radially inner side of the bearing, and any contaminants entering between the wall 62 and the cylindrical reservoir 16 will drop down through weep holes 68 cut through the lower part of the bearing seat 30. Any contaminants building up on the top of the upper shielding wall 66 will be shed down and over the top of the lower spring seat 26. Also, in the generally annular area between the cylindrical inner shielding wall 62 and the damper 12 any large contaminants will not be wedged between relatively rotating parts, because these two parts are relatively stationary. Although the upper shielding wall 66 and the lower spring seat 26 do rotate relative to one another, the clearance between them is slight, and their close conformation and the length of the potential entry path prevents the entry of contaminants. The radially outer side of the bearing balls 44 is sealed by the sealing wall 56.

As previously mentioned, any bearing 28 could be used with the shielding and retention member 60 in conformity with the invention, as long as means were utilized to permit the deforming of a lower portion of the cylindrical inner shielding wall 62 into a sub-assembly that is non-turnably held with the lower race 42. The elastomer layer 46 represents such means in the embodiment disclosed. The elastomer layer 46 could be made compressible enough to allow the axial clearance to be created by the force of the spring after assembly to the suspension. If a different or less compressible material were to be used, or simple race-to-bearing seat contact, then the axial clearance between the upper surface of the lower spring seat 26 and the upper shielding wall 66 would be more rigidly controlled when the sub-assembly was built up. What is required is some sort of lower race to seat directly or indirectly on the bearing seat portion of the damper, to contain the balls in co-operation with the bearing housing portion, and to be non-turnably connected to the first shielding wall.

Additionally, the upper shielding wall 66 could be given a different shape or a larger extent to cover more of the top surface of the lower spring seat 26, as long as the required clearances were maintained in operation as described.

In summary, therefore, the present invention makes available an easily handled bearing/shielding wall/lower spring seat sub-assembly which allows the bearing to be placed between the lower spring seat and a bearing seat on the damper, rather than between an elastomer pad and an upper spring seat.

In the specific embodiment described, the integral shielding walls 66 and 62 hold the bearing 28 and the lower spring seat 26 together as a sub-assembly which can be separately handled for shipping. When this sub-assembly is put in place in the suspension, the coil spring 14 pushes down on the lower spring seat 26, so squeezing the bearing races 40 and 42 together, to keep the upper shielding wall 66 away from the spring seat 26 so that it can turn without rubbing. The wall 62 shields the radially inner side of the bearing.

The inventive concept may readily be applied to bearings of any type or size, that are to be assembled with suspensions of any size.

## Claims

1. A steerable vehicle suspension strut assembly in which a shock-absorbing compression spring (14) surrounds a piston-type damper (12) and has an upper spring end relatively non-turnable with respect to the vehicle, whereas a lower spring end is seated on and biases a lower spring seat (26) which is relatively turnable with respect to the damper (12) on the anti-friction elements (44) of a bearing (28) seated on a bearing seat (30) of the damper (12), characterised in that a shielding and retention means (60) for retaining the lower spring seat (26) and the bearing (28) together as a sub-assembly of the suspension strut (10) when separate from the strut (10), as well as for shielding the bearing (28) when the sub-assembly is assembled with the strut (10), comprises;

a generally cylindrical first shielding wall portion (62) spaced sufficiently from the damper (12) to provide clearance therefrom as the sub-assembly is assembled with the strut (10) and extending a sufficient axial distance alongside the bearing (28) to shield the bearing (28) from contaminants;

a generally annular second shielding wall portion (66) extending from the first shielding wall portion (62) over a portion of the lower spring seat (26) and adapted in operation to be spaced a predetermined axial clearance therefrom; and

a retention portion (64) on the first shielding wall portion (62) joined non-rotatably to a portion (52) of the bearing (28) and co-operating with the first shielding wall portion (62) to hold the bearing (28) and the lower spring seat (26) portion together as a separate sub-assembly until assembled with the suspension strut (10);

with the axial biasing of the lower spring seat (26) by the spring (14) towards the seated bearing (28) when the sub-assembly is assembled with the suspension strut (10) serving to maintain not less than the said predetermined axial clearance between the upper surface of the lower spring seat (26) and the second shielding wall (66) to ensure free turning of the damper (12) on the bearing (28) relative to the lower spring seat (26), and with the first and second shielding walls (62 and 66) being effective to exclude contaminants from the bearing (28) during operation thereof.

2. A steerable vehicle suspension strut assembly according to claim 1, characterised in that the lower spring seat (26) surrounds and is radially spaced from the damper (12), the bearing (28) is disposed between the under surface of the lower spring seat (26) and the bearing seat (30) of the damper (12), a resilient bottom layer (46) is joined to a lower race (42) of the bearing (28) and engageable with the bearing seat (30), the annular shielding wall (66) of the shielding and retention member (60) is closely conformable to a top surface of the lower spring seat (26), the retention portion (64) of the inner shielding wall (62) is in gripping engagement with the resilient layer (46) of the lower race (42), and when the sub-assembly is assembled with the suspension strut (10) the axial bias of the compression spring (14) against the lower spring seat (26) serves to compress the resilient bottom layer (46) of the lower race (42) of the bearing (28) sufficiently to provide the required axial clearance between the lower spring seat (26) and the annular shielding wall (66).

3. A steerable vehicle suspension strut assembly according to claim 1 or 2, characterised in that the lower spring seat (26) has a generally annular bearing housing portion (36) with an opening (38) therethrough of sufficient size to clear the damper (12), the lower bearing race (42) is generally annular in form, the generally cylindrical first shielding wall (62) of the shielding and retention member (60) is of a diameter small enough to clear the edge of the opening (38) in the bearing housing portion (36) and extends to the lower race (42), and the retention portion (64) of the first shielding wall portion (62) is effective to space the second shielding wall portion (66) axially away from the upper surface of the bearing housing portion (36) with a predetermined axial clearance small enough to retain the lower spring seat (26), the lower race (42) and the anti-friction elements (44) together as a substantially rattle-free sub-assembly.

**Patentansprüche**

1. Aufbau eines Federbeines für gelenktes Fahrzeugrad, bei dem eine stoßaufnehmende Druckfeder (14) einen Dämpfer (12) der Kolbenbauart umgibt und ein relativ zum Fahrzeug nicht verdrehbares oberes Federende aufweist, während ein unteres Federende auf einem unteren Federsitz (26), der relativ zum Dämpfer (12) auf den Anti-Reibungselementen (44) eines Lagers (28) verdrehbar ist, aufsitzt und gegen diesen drückt, dadurch gekennzeichnet, daß eine Schutz- und Haltevorrichtung (60) zum Zusammenhalten des unteren Federsitzes (26) und des Lagers (28) als Unterbaugruppe des Federbeins (10), wenn diese vom Federbein (10) getrennt ist, ebensowie zum Schützen des Lagers (28), wenn die Unterbaugruppe mit dem Federbein (10) zusammengefügt ist, folgendes aufweist: .

— einen im allgemeinen zylindrischen ersten Schutzabdeckungs-Wandbereich (62), der ausreichend vom Dämpfer (12) beabstandet ist, um einen Freiraum zwischen sich und dem Dämpfer zu bestimmen, wenn die Unterbaugruppe mit dem Federbein (10) zusammengefügt ist und der sich über eine ausreichende axiale Strecke entlang des Lagers (28) erstreckt, um das Lager (28) vor Verschmutzungen zu schützen;

— einen im allgemeinen ringförmigen zweiten Schutzabdeckungs-Wandbereich (66), der sich vom ersten Schutzabdeckungs-Wandbereich (62) über einen Abschnitt des Federsitzes (26) erstreckt und so eingerichtet ist, daß er im Betrieb von diesem einen vorgegebenen Axialabstand aufweist; und

— einen Rückhalteabschnitt (64) am ersten Schutzabdeckungs-Wandbereich (62), der nicht drehbar mit einem Abschnitt (52) des Lagers (28) verbunden ist und mit dem ersten Schutzabdeckungs-Wandbereich (62) zusammenwirkt, um das Lager (28) und den Federsitzabschnitt (26) als separate Unterbaugruppe zusammenzuhalten bis sie mit dem Federbein (10) zusammengefügt ist,

wobei das axiale Verspannen des unteren Federsitzes (26) durch die Feder (14) gegen den gelagerten unteren Laufring (42), wenn die Unter-

9 0 136 023 10

baugruppe mit dem Federbein (10) zusammengebaut ist, dazu dient, einen nicht geringeren als den vorgenannten axialen Spielraum zwischen der oberen Fläche des unteren Federsitzes (26) und der zweiten Schutzabdeckungs-Wand (66) beizubehalten, um ein freies Drehen des Dämpfers (12) auf dem Lager (28) relativ zum unteren Federsitz (26) zu gewährleisten und wobei die erste und die zweiet Schutzabdeckungs-Wand (62 und 66) ein Fernhalten von Verschmutzungen vom Lager (28) während dessen Betrieb bewirken.

2. Aufbau eines Federbeines für gelenktes Fahrzeugrad nach Anspruch 1, dadurch gekennzeichnet, daß der untere Federsitz (26) den Dämpfer (12) umgibt und von diesem radial beabstandet ist, daß das Lager (28) zwischen der Unterfläche des unteren Federsitzes (26) und einem Lagersitzabschnitt (30) des Dämpfers (12) angeordnet ist, daß eine elastische Unterlage (46) mit einem unteren Laufring (42) des Lagers (28) verbunden und mit dem Lagersitzabschnitt (30) in Eingriff bringbar ist, daß die ringförmige Schutzabdeckungs-Wand (66) der Schutz- und Haltevorrichtung (60) einer oberen Fläche des unteren Federsitzes (26) genau entspricht, daß der Rückhalteabschnitt (64) der inneren Schutzabdeckungs-Wand (62) im festen Eingriff mit der elastischen Lage (46) des unteren Laufrings (42) ist und daß die axiale Federkraft der Druckfeder (14) gegen den unteren Federsitz (26) dazu dient, die elastische Unterlage (46) des unteren Laufrings (42) des Lagers (28) ausreichend zusammenzudrücken, wenn die Unterbaugruppe mit dem Federbein (10) zusammengefügt ist, um den benötigten axialen Abstand zwischen dem unteren Federsitz (26) und der ringförmigen Schutzabdeckungs-Wand (66) zu schaffen.

3. Aufbau eines Federbeines für gelenktes Fahrzeugrad nach 1 oder 2, dadurch gekennzeichnet, daß der untere Federsitz (26) einen im allgemeinen ringförmigen Lagergehäuseabschnitt (36) mit einer diesen durchdringenden Öffnung (38) aufweist, die eine ausreichende Größe hat, um den Dämpfer (12) durchzulassen, daß der untere Lagerlaufring (42) eine im allgemeinen ringförmige Form aufweist, daß die im allgemeinen zylindrische, erste Schutzabdeckungs-Wand (62) der Schutz- und Haltevorrichtung (60) einen Durchmesser besitzt, der gering genug ist, um in die Öffnung (38) im Lagergehäuseabschnitt (36) hineinzupassen, und sich zum unteren Laufring (42) hin erstreckt und daß der Rückhalteabschnitt (64) des ersten Schutzabdeckungs-Wandbereichs (62) den zweiten Schutzabdeckungs-Wandbereich (66) axial von der oberen Fläche des Lagergehäuseabschnitts (36) mit einem vorgegebenen axialen Spielraum beabstandet hält, der klein genug ist, um den unteren Federsitz (26), den unteren Laufring (42) und die Anti-Reibungs-Elemente (44) als eine im wesentlichen klapperfreie Unterbaugruppe zusammenzuhalten.

**Revendications**

1. Ensemble jambe de suspension de roue directrice de véhicule dans lequel un ressort de compression (14) formant amortisseur entoure un amortisseur (12) du type à piston et comprend une extrémité supérieure de ressort qui ne tourne pas par rapport au véhicule, tandis qu'une extrémité inférieure du ressort est appuyée contre une portée de ressort inférieure (26) qui tourne par rapport à l'amortisseur (12) et tend à appuyer cette portée de ressort sur des éléments anti-friction (44) d'un palier ou roulement (28), caractérisé en ce que des moyens de protection et de retenue (60) destinés à retenir la portée de ressort inférieure (26) et le palier (28) réunis en un sous-ensemble de la jambe de suspension (10) lorsqu'ils sont séparés de la jambe de suspension (10), ainsi qu'à protéger le palier (28) lorsque le sous-ensemble est assemblé à la jambe de suspension (10), comprend:

une première partie de paroi de protection (62) de forme générale cylindrique, qui est suffisamment espacée de l'amortisseur (12) pour en être dégagée lorsque le sous-ensemble est assemblé à la jambe de suspension (10), et qui s'étend sur une distance axiale suffisante le long du palier (28) pour protéger le palier (28) des corps étrangers;

une deuxième partie de paroi de protection (66) de forme générale annulaire, qui fait saillie sur la première partie de paroi de protection (62) pour recouvrir une partie de la portée de ressort (26) et qui est adaptée en fonctionnement pour être espacée de cette portée de ressort d'un jeu axial prédéterminé; et

une partie de retenue (64) prévue sur la première partie de paroi de protection (62) qui est réunie solidairement à une partie (52) du palier (28), et qui coopère avec la première partie de paroi de protection (62) pour retenir le palier (28) et la partie de portée de ressort (26) réunis en un sous-ensemble séparé jusqu'à ce qu'ils soient assemblés à la jambe de suspension (10);

la sollicitation axiale qui est exercée sur la portée de ressort inférieure (26) par le ressort (14) vers le bague inférieure (42) appuyée, lorsque le sous-ensemble est assemblé à la jambe de suspension (10), servant à maintenir à une valeur non inférieure à la valeur prédéterminée, le jeu axial existant entre la surface supérieure de la portée inférieure (26) et la deuxième paroi de protection (66) pour assurer la liberté de la rotation de l'amortisseur (12) sur le palier (28), par rapport à la portée de ressort inférieure (26) et à la première et la deuxième parois de protection (62 et 66) excluant efficacement la pénétration de corps étrangers dans le palier (28) pendant le fonctionnement de celui-ci.

2. Ensemble jambe de suspension pour roue directrice de véhicule selon la revendication 1, caractérisé en ce que la portée de ressort inférieur (26) entoure l'amortisseur (12) et est espacée radialement de cet amortisseur, le palier (28) est disposé entre la surface inférieure de la portée de ressort inférieure (26) et une partie de portée de palier (30) de l'amortisseur (12), une couche inférieure élastique (46) est réunie à la bague inférieure (42) du palier (28) et peut s'appuyer sur la partie de portée de palier (30), la paroi annulaire de protection (66) de l'élément de protection et de retenue (60) est étroitement conforme à la surface supérieure de la portée de ressort inférieure (26), la partie de retenue (64) de la paroi de protection intérieure (62) est en prise avec serrage avec la couche élastique (46) de la bague inférieure (42) et, lorsque le sous-ensemble est assemblé à la jambe de suspension (10), la sollicitation axiale exercée par le ressort de compression (14) contre la portée de ressort inférieure (26) sert à comprimer la couche inférieure élastique (46) de la bague inférieure (42) du palier (28) dans une mesure suffisante pour établir le jeu axial nécessaire entre la portée de ressort inférieure (26) et la paroi de protection annulaire (66).

3. Ensemble jambe de suspension pour roue directrice de véhicule selon l'une des revendications 1 ou 2, caractérisé en ce que la portée de ressort inférieure (26) comprend une partie (36) de logement du palier, de forme générale annulaire, qui est traversée d'une ouverture (38) d'une dimension suffisante pour dégager l'amortisseur (12), la bague inférieure (42) du palier est de forme générale annulaire, la première paroi de protection (62) de forme générale cylindrique de l'élément de protection et de retenue (60) est d'un diamètre suffisamment petit pour dégager le bord de l'ouverture (38) de la partie (36) de logement du palier et se prolonge jusqu'à la bague inférieure (42), et la partie de retenue (64) de la première partie de paroi de protection (62) a pour action de maintenir la deuxième partie de paroi de protection (66) espacée axialement de la surface supérieure de la partie (36) de logement du palier, d'un jeu axial prédéterminé suffisamment petit pour retenir la portée de ressort inférieure (26), la bague inférieure (42) et les éléments anti-friction (44) réunis en un sous-ensemble pratiquement exempt de battements.

Fig.1

0 136 023

Fig.2

Fig.3

2